(19) Europäisches Patentamt / European Patent Office / Office européen des brevets

(11) **EP 2 134 073 A1**

(12) **EUROPEAN PATENT APPLICATION**

(43) Date of publication:
**16.12.2009 Bulletin 2009/51**

(51) Int Cl.:
*H04N 1/401* (2006.01)     *H04N 1/60* (2006.01)

(21) Application number: **08305260.5**

(22) Date of filing: **13.06.2008**

(84) Designated Contracting States:
**AT BE BG CH CY CZ DE DK EE ES FI FR GB GR HR HU IE IS IT LI LT LU LV MC MT NL NO PL PT RO SE SI SK TR**
Designated Extension States:
**AL BA MK RS**

(71) Applicant: **THOMSON Licensing
92100 Boulogne-Billancourt (FR)**

(72) Inventors:
• **Blonde, Laurent
35440 Montreuil sur Ille (FR)**
• **Stauder, Jürgen
35440 Montreuil sur Ille (FR)**
• **Moine, Caroline
35000 Rennes (FR)**

(74) Representative: **Ruellan-Lemonnier, Brigitte
Thomson multimedia
Patent Department
46 Quai A. Le Gallo
92648 Boulogne Cedex (FR)**

(54) **Rectangular calibration chart for calibration of color device**

(57)     The rectangular calibration chart 1 comprises a plurality of parallel stripe-like color patches that are distributed into groups 11, ..., 14 of adjacent color patches 111, 112, 113, 114, ..., 118, each stripe-like color patch having a uniform calibration color. The calibration colors of the different stripe-like color patches are regularly distributed in a perceptually uniform visual color space.

Thank to this regular distribution, the best compromise can be found between the lowest number of different color patches and the highest accuracy of the calibration of a given color device. Such a calibration chart is advantageously used to correction of non-uniformities of the color device.

Fig.2

EP 2 134 073 A1

## Description

The invention relates to a set of calibration color charts or calibration color targets, comprising a plurality of patches for the calibration of image input devices or image output devices. Image input devices includes cameras and scanners. Image output devices include display devices and printers.

Such color charts or targets may be printed on paper or film, or may be electronically stored. Each chart or target comprises a plurality of color patches having different colors, the color of each patch being generally homogeneous on its entire surface.

The documents US6494557 and US2003/063338 disclose using color charts for calibration of color printers. The document US7170535 discloses using color charts for calibration of color displays. The documents WO2007/025878, US4745467, US6404517 and US6069973 disclose calibration charts or targets having horizontal color stripes as color patches. The document US6284445 discloses a specific arrangement of calibration patches in a two dimensional array forming a calibration target. The document US5416613 discloses a calibration target for a color printer having a plurality of color patches, some of which may be repeated at spatially disparate locations selected to keep local printer non-uniformities from affecting the repeated locations. The document US6717674 refers to standardized IT8 calibration targets and discloses using a calibration target having two groups of color patches wherein some color patches of the first group are repeated in the second group, to evaluate or to compensate some non-uniformities : applied to a printer, a stability of colors in an in-plane direction and a stability of colors for the lapse of time at the time when the printer outputs an image are determined.

The Committee IT8 for Digital Data Exchange Standards of the American National Standard Institute (ANSI) has established for many year series of calibration test targets referenced IT8.7/1, IT8.7/2, IT8.7/3 that are more specifically dedicated to the calibration of scanners, presses, and printers in the graphic Industry.

For the calibration of image input devices or image output devices, the number of different color patches should be high enough to provide an accurate calibration for the highest number of different colors. But the higher is the number of color patches, the more time consuming is the calibration procedure. An object of the invention is to define calibration color charts or calibration color targets that would allow the best compromise between the lowest number of different color patches and the highest accuracy of calibration of a color device.

For this purpose, the subject of the invention is a rectangular calibration chart comprising a plurality of parallel stripe-like color patches that are distributed into groups of adjacent color patches, each stripe-like color patch having a uniform calibration color, wherein the calibration colors of the different stripe-like color patches are regularly distributed in a perceptually uniform visual color space. Thank to the regular distribution of calibration colors of the different vertical stripe-like color patches into a perceptually uniform visual color space, the best compromise can be found between the lowest number of different color patches and the highest accuracy of the calibration of a given color device.

Preferably, the calibration color of each color patch is separated from the calibration color of any adjacent color patch of the same group by the same distance $d_{ref}$ in said perceptually uniform visual color space.

Preferably, the rectangular calibration chart comprises at least one crossing stripe-like color patch that has a uniform calibration color and that crosses perpendicularly all the parallel stripe-like color patches of said groups. Thank to this at least one crossing stripe-like color patch, the correction of spatial non-uniformity can be advantageously performed in two dimensions (for instance, vertical and horizontal) during the calibration procedure of a color display device.

The subject of the invention is also a set of successive rectangular calibration charts according to the invention, wherein, in any two successive rectangular calibration charts of this set, there are at least two stripe-like color patches having the same calibration color and being positioned at the same location in its rectangular calibration chart. Advantageously, when using such a set of rectangular calibration charts for implementing a method of calibration of a color device, not only the spatial non-uniformities can be compensated, but also the time-dependant non-uniformities.

Preferably, any said at least two stripe-like color patches in two successive rectangular calibration charts of this set - that have the same calibration color and are positioned at the same location - are not positioned at the same location as any other said at least two stripe-like color patches in two successive rectangular calibration charts of this set - that have the same calibration color and are positioned at the same location. As the positions of the parallel stripe-like color patches having the same calibration colors vary from one pair of calibration color charts to another pair, the compensation of the time-dependant non-uniformities may also be advantageously spatially compensated.

Preferably, any said at least two parallel stripe-like color patches in two successive rectangular calibration charts of this set - that have the same calibration color and are positioned at the same location - do not have the same calibration color as any other said at least two stripe-like color patches in two successive rectangular calibration charts of this set - that have the same calibration color and are positioned at the same location. As the calibration colors of the parallel stripe-like color patches having the same calibration colors varies from one pair of calibration color charts to another pair, the compensation of the time-dependant non-uniformities may also be advantageously color compensated.

The subject of the invention is also a method of calibration of a color device comprising a step in which at least a rectangular calibration chart according to the invention, or a set of successive rectangular calibration charts according according to the invention, is displayed or captured in order to compensate for any spatial non-uniformity of said color device.

Preferably, each stripe-like color patch associated to a calibration color is used to determine a uniformity correction function for this calibration color in a given direction, and in that each crossing stripe-like color patch associated to a calibration chart is used to determine a uniformity correction function in another direction.

Preferably, for each calibration color, a two-dimensional calibration function is inferred from its uniformity correction function in a given direction and from said uniformity correction function in another direction.

The invention will be more clearly understood on reading the description which follows, given by way of non-limiting example and with reference to the appended figures in which:

- Figure 1 illustrates a rectangular calibration chart according to a main embodiment of the invention;
- Figure 2 illustrates a set of rectangular calibration charts according to figure 1, with some specific improvements ;
- Figure 3 illustrates a system of calibration of a color display device using a set of rectangular calibration charts according to figure 2;
- Figure 4 illustrates a series of color measurements along a crossing stripe-like color patch of a calibration chart of a set according to figure 2, using the system of figure 3;
- Figure 5 illustrates the series of color measurements of figure 4, after normalization;
- Figure 6 illustrates a series of color measurements along a parallel stripe-like color patch of a calibration chart of a set according to figure 2, using the system of figure 3;
- Figure 7 illustrates the series of color measurements of figure 6, after normalization.

The figures take no account of the scale of values so as to better reveal certain details, which would not be clearly apparent if the proportions had been respected.

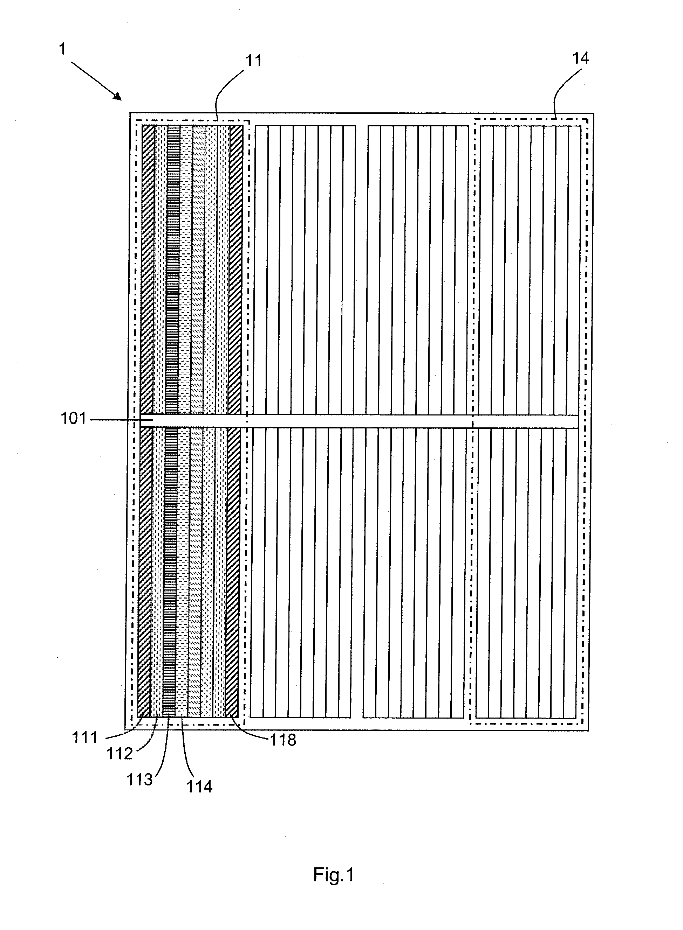

A rectangular calibration chart according to a main embodiment of the invention will now be described in reference to figure 1. This chart 1 comprises a plurality of parallel stripe-like color patches that are distributed into groups 11, ..., 14 and that are here vertically oriented ; within each group, the different color patches 111, 112, 113, 114, ..., 118 are adjacent , with no space separating them; each patch has a uniform calibration color , and, according to the invention, the calibration colors of the different color patches are regularly distributed in the CIE L*a*b* color space; more precisely, the calibration color of each color patch is separated from the calibration color of any adjacent color patch of the same group by the same distance $d_{ref}$ in the CIE L*a*b* color space. The CIE L*a*b* color space is a perceptually uniform visual color space. Other perceptually uniform visual color spaces may used as the CIE L*u*v*. This color calibration chart 1 also comprises one stripe-like color patch 101 that extend horizontally across the entire width of the chart 1 in order to cross all the parallel stripe-like color patches 111, 112, 113, 114, ..., 118 of the different groups 11, ..., 14; this horizontal stripe-like color patch 101 has also a uniform calibration color.

The calibration colours of the different color patches are distributed such as the color distance between neighbouring color patches is constant and equals $d_{ref}$. If $\Delta a$ and $\Delta b$ are the variation in chromaticity between the calibration colors of two adjacent color patches, then

$$\Delta a^2 + \Delta b^2 = d_{ref}^2 .$$ Regular sampling in L*a*b* space has the advantage that perceived colour distances are more constant than in other colour spaces. This ideally means that if any two colours have a certain distance in L*a*b* space and any two second colours have the same distance in L*a*b* space, then a human perceives the same distance between the first two and between the second two colors.

An advantageous application of a set of such rectangular calibration charts for the calibration and the correction of color non-uniformities of a color display device P will now be described, in which :

- a central horizontal uniformity correction function will be determined based on color measurements performed all along the horizontal crossing stripe-like color patch 101 ;
- from color measurements on each vertical stripe-like color patch 111, 112, 113, 114, ... associated with its own calibration color, and for each group 11, 12, 13 of the color chart 1, a vertical uniformity correction function will be determined for said calibration color.

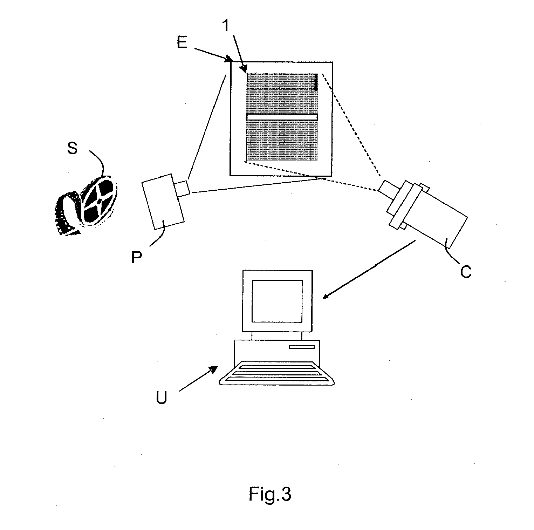

Referring to figure 3, the color display device P to calibrate is an image projector using films or film loops as source images. For the calibration, a calibration set S of different rectangular calibration charts 1, 2, 3, ... is prepared on a film or different film loops. Using this film or film loops, the color display device P projects images of these different rectangular calibration charts 1, 2, 3, ... on a projection screen E. An imaging colorimeter C captures these different projected images and transfers the data related to these images to a control unit U for further processing.

As imaging colorimeter C, an instrument called "MURATest" is used. This instrument is based on five optical filters (two for the red component, two for the green component, and one for the blue component) to capture simultaneously the image of several calibration color patches as projected on the screen E. This imaging colorimeter C is manufactured by the ELDIM Company based in Caen, France. Such an imaging colorimeter C acquires in a single shot a global matrix of XYZ values as would do a digital still camera. For this instrument, the size of this XYZ image is 1441x961 pixels. The output values that are delivered by this instrument are high dynamic calibrated XYZ measures in the visual domain. For each pixel of the projected image, X, Y, Z data values are delivered, these values representing the color of this pixel in the CIE XYZ visual color space.

For each stripe-like color patch of a calibration color chart that is imaged on the projection screen E, measurements are performed by the imaging colorimeter at a series of points regularly distributed all along said stripe-like color patch. The MURATest is turned 90 degrees if stripe-like color patches are horizontal instead of being vertical as in this embodiment, in order to use its direction of higher resolution (1441 pixels) in the smaller dimension of stripe-like color patches.

It is important to determine the exposure time needed for the accurate measurement of each stripe-like color patch, it means with a correct signal to noise ratio (as noise is mainly photon noise, it decreases with exposure time). This optimum exposure time depends on the colors to be measured and may vary from one calibration color chart to the other. The setting of the optimum exposure time for each calibration color chart is determined in a manner known per se. The optimum exposure time can be about one minute for a bright image, against forty-five minutes for a very dark one. Once charts have been defined, each with a known optimal exposure time, film loops can be prepared, repeating the right number of frames for each chart (loops are about 120 frames).

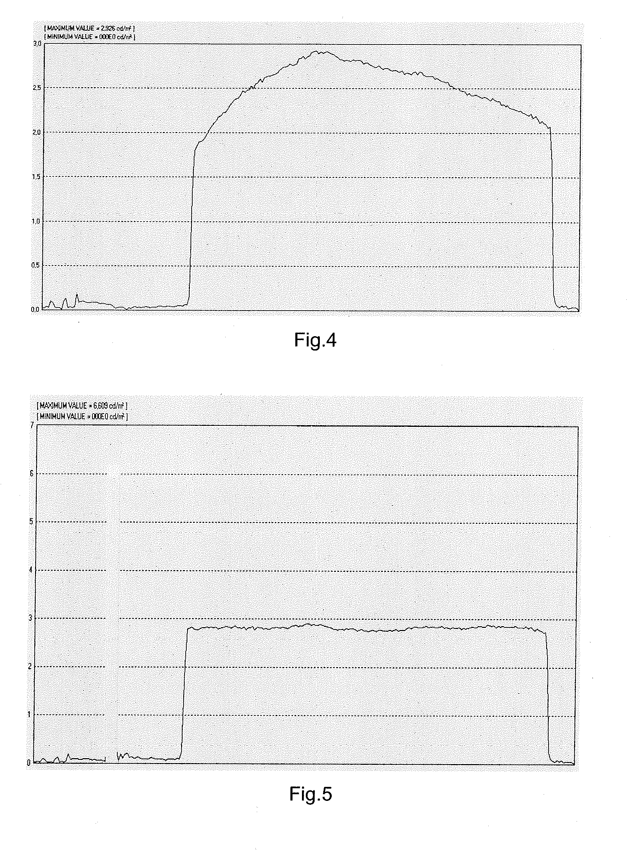

The **first step** of the calibration method is to determine a central horizontal uniformity correction function from color measurements performed all along the horizontal crossing stripe-like color patch 101 of each color chart. The horizontal position of this horizontal crossing stripe-like color patch 101 can be detected automatically by image processing means embedded in the control unit U. Preferably, a color measurement is performed by the imaging colorimeter C at each crossing of this horizontal crossing stripe-like color patch 101 with a vertical stripe-like color patch 111, 112, 113, 114, ... of the same calibration color chart 1. Each measurement is transferred to the control unit U. Figure 4 illustrates the distribution of the different measurements that are obtained along the horizontal length of the horizontal crossing stripe-like color patch 101. Using adapted software embedded in the control unit U, each measured color value is then normalized by the maximum value that is obtained for this horizontal crossing stripe-like color patch 101, in order to have a flat distribution as illustrated on figure 5 . Using a usual polynomial approximation method embedded in the control unit U, a central horizontal uniformity correction function is then obtained.

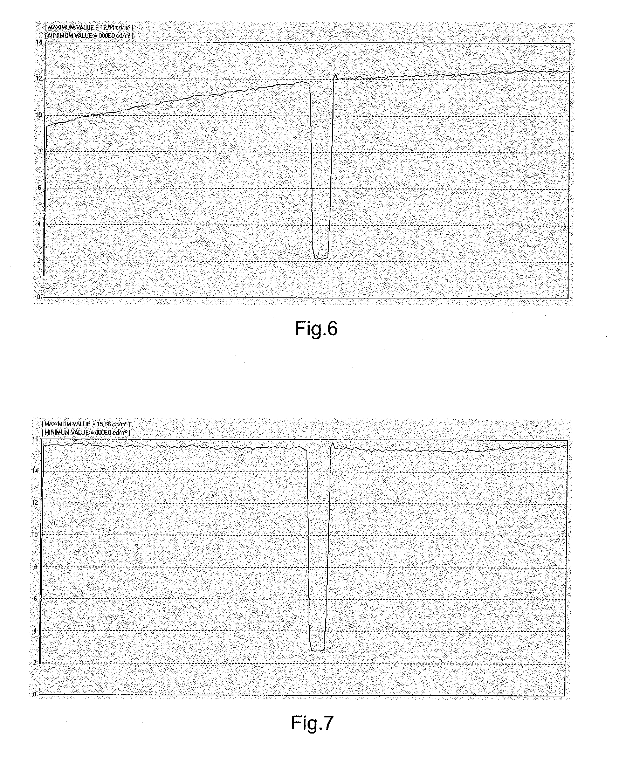

The **second step** of the calibration method is to determine a vertical uniformity correction function for each calibration color, using the different vertical stripe-like calibration color patches distributed on one or several color charts 1, 2, 3, ... of the calibration set S. Using the imaging colorimeter C, a series of color measurements is performed all along each vertical calibration color patch. In the current implementation, 40 measurements locations are chosen, equally distributed along the length of each vertical stripe-like calibration color patch. Figure 6 represents a typical distribution of such measurements along the vertical length of one vertical stripe-like calibration color patch, where the crossing of the horizontal crossing stripe-like color patch 101 can be seen at the middle of the curve. Each measurement is transferred to the control unit U. Using the same algorithm as for the first step, a polynomial approximation is done for each stripe-like calibration color patch of a given calibration color, and the resulting coefficients are normalized with the specific value of the central horizontal uniformity correction function at the location of the crossing with the horizontal stripe-like color patch : see figure 7. A vertical uniformity correction function is then obtained for each calibration color.

**After these two steps,** each calibration color is associated with a vertical uniformity correction function that is positioned at a specific horizontal position corresponding to the horizontal position of the vertical stripe-like calibration color patch that has been used for this calibration color. To evaluate the vertical uniformity correction functions at other horizontal positions, the horizontal uniformity correction function is used. Finally, a two-dimensional uniformity correction function is obtained for each calibration color.

From these two-dimensional uniformity correction functions, a 2D-map of attenuation coefficients is obtained for each calibration color. Finally, the calibration of the image display device P is obtained by applying an attenuation coefficient to each color value of the images to be displayed. The attenuation coefficient of any color value of a given pixel of an image to be displayed is derived from the 2D-map of this color value, which is interpolated in a manner known per se from the 2D-maps of the nearest calibration color values.

Other methods of calibration and/or correction of color non-uniformities of a color device may use advantageously rectangular calibration charts according to the invention, as for instance the methods described in the document US7170535.

Other color devices can be advantageously calibrated using rectangular calibration charts according to the invention, as for instance flat display panels, printers, digital still cameras.

Instead of being printed on film as in the above example, rectangular calibration charts according to the invention may be recorded electronically, displayed electronically, or printed on papers.

Thank to the regular distribution of calibration colors of the different vertical stripe-like color patches into the L*a*b* color space according to the invention, the best compromise can be found between the lowest number of different color patches and the highest accuracy of the calibration of a given color device. Moreover, time can be saved for calibration procedures.

Thank to the crossing stripe-like color patch 101 in each calibration color chart that is used for the calibration of the color display device P, the correction of spatial non-uniformities can be advantageously performed both vertically and horizontally for each calibration color.

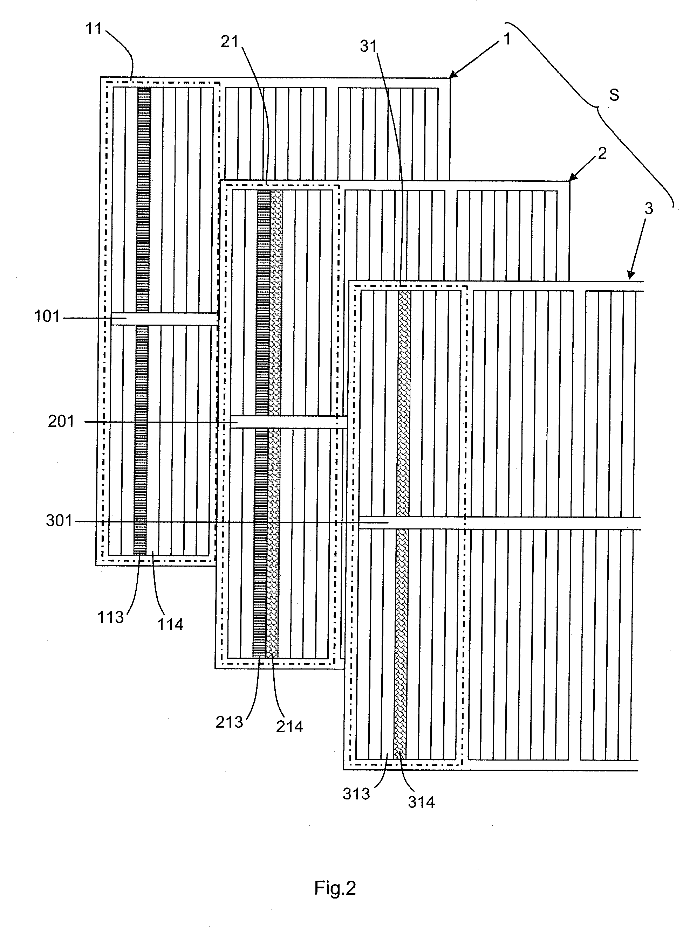

Improvements of the set of rectangular calibration charts according to the invention will now be described in reference to figure 2. According to a first improvement, in any two successive rectangular calibration charts 1, 2 ; 2, 3 of this set, there are at least two parallel stripe-like color patches 113, 213 ; 214, 314 having the same calibration color and being positioned at the same location in its rectangular calibration chart 1, 2, 3. Moreover, according to a second improvement, the two parallel stripe-like color patches 113, 213 in the two successive rectangular calibration charts 1, 2 are not positioned at the same location as the two parallel stripe-like color patches 214, 314 in the other two successive rectangular calibration charts 2, 3. Moreover, according to a third improvement, the two parallel stripe-like color patches 113, 213 in the two successive rectangular calibration charts 1, 2 do not have the same calibration color as the two parallel stripe-like color patches 214, 314 in the other two successive rectangular calibration charts 2, 3.

Advantageously, when using such a set of rectangular calibration charts for implementing the above-described method of calibration and correction of non-uniformities of a color display device P, not only the spatial non-uniformities can be compensated as described above, but also the time-dependant non-uniformities. As a matter of fact, the parallel stripe-like color patches that have the same calibration color in different rectangular calibration charts that are displayed at different times are used to compensate for any potential variations of the display of these parallel stripe-like color patches at these different times. These "common" parallel stripe-like color patches may be used as time references as, for instance, in the method disclosed in the document US5416613.

Moreover, thanks to the second improvement, as all the parallel stripe-like color patches having the same calibration colors are not positioned at the same locations in the pairs of different calibration color charts, the compensation of the time-dependant non-uniformities may also be spatially compensated.

Moreover, thanks to the third improvement, as the calibration colors of the parallel stripe-like color patches having the same calibration colors varies from one pair of calibration color charts to another pair, the compensation of the time-dependant non-uniformities may also be advantageously color compensated.

These and other features and advantages of the principles of the present invention may be readily ascertained by one of ordinary skill in the pertinent art based on the teachings herein. It is to be understood that the teachings of the present invention may be implemented in various forms of hardware, software, firmware, special purpose processors, or combinations thereof.

While the present invention is described with respect to particular examples and preferred embodiments, it is understood that the present invention is not limited to these examples and embodiments. The present invention as claimed therefore includes variations from the particular examples and preferred embodiments described herein, as will be apparent to one of skill in the art. While some of the specific embodiments may be described and claimed separately, it is understood that the various features of embodiments described and claimed herein may be used in combination.

## Claims

1. Rectangular calibration chart (1) comprising a plurality of parallel stripe-like color patches that are distributed into groups (11, ..., 14) of adjacent color patches (111, 112, 113, 114, ..., 118), each stripe-like color patch having a uniform calibration color, **characterized in that** the calibration colors of the different stripe-like color patches are regularly distributed in a perceptually uniform visual color space.

2. Rectangular calibration chart (1) according to claim 1 **characterized in that** the calibration color of each color patch is separated from the calibration color of any adjacent color patch of the same group by the same distance $d_{ref}$ in said perceptually uniform visual color space.

3. Rectangular calibration chart according to claim 1 or 2 **characterized in that** it comprises at least one crossing stripe-like color patch (101) that has a uniform calibration color and that crosses perpendicularly all the parallel stripe-like color patches (111, 112, 113, 114, ..., 118) of said groups (11, ..., 14).

4. Set of successive rectangular calibration charts (1, 2, 3, ...., n, n+1, ...., N) according to any one of claims 1 to 3, **characterized in that**, in any two successive rectangular calibration charts [(1, 2); (2, 3), ..., (n, n+1), ..., (N-1, N)] of this set, there are at least two stripe-like color patches [(113, 213); (214, 314), ...] having the same calibration color and being positioned at the same location in its rectangular calibration chart.

5. Set of successive rectangular calibration charts (1, 2, 3, ...., n, n+1, ...., N) according to claim 4 **characterized in that** any said at least two stripe-like color patches (113, 213) in two successive rectangular calibration charts (1, 2) of this set that have the same calibration color and are positioned at the same location are not positioned at the same location as any other said at least two stripe-like color patches (214, 314) in two successive rectangular calibration charts (2, 3) of this set that have the same calibration color and are positioned at the same location.

6.  Set of successive rectangular calibration charts (1, 2, 3, ...., n, n+1, ...., N) according to claim 4 or 5 **characterized in that** any said at least two parallel stripe-like color patches (113, 213) in two successive rectangular calibration charts (1, 2) of this set that have the same calibration color and are positioned at the same location do not have the same calibration color as any other said at least two stripe-like color patches (214, 314) in two successive rectangular calibration charts (2, 3) of this set that have the same calibration color and are positioned at the same location.

7.  Method of calibration of a color device comprising a step in which at least a rectangular calibration chart according to any one of claims 1 to 3 or a set of successive rectangular calibration charts according to any one of claims 4 to 6 is displayed or captured in order to compensate for any spatial non-uniformity of said color device.

8.  Method of calibration of a color device according to claim 7, **characterized in that** each stripe-like color patch associated to a calibration color is used to determine a uniformity correction function for this calibration color in a given direction, and **in that** each crossing stripe-like color patch associated to a calibration chart is used to determine a uniformity correction function in another direction.

9.  Method of calibration of a color device according to claim 8, **characterized in that**, for each calibration color, a two-dimensional calibration function is inferred from its uniformity correction function in a given direction and from said uniformity correction function in another direction.

Fig.1

Fig.2

Fig.3

[ MAXIMUM VALUE = 2.926 cd/m² ]
[ MINIMUM VALUE = 000E0 cd/m² ]

Fig.4

[ MAXIMUM VALUE = 6.609 cd/m² ]
[ MINIMUM VALUE = 000E0 cd/m² ]

Fig.5

[ MAXIMUM VALUE = 12.54 cd/m² ]
[ MINIMUM VALUE = 000E0 cd/m² ]

Fig.6

[ MAXIMUM VALUE = 15.86 cd/m² ]
[ MINIMUM VALUE = 000E0 cd/m² ]

Fig.7

Europäisches
Patentamt
European
Patent Office
Office européen
des brevets

# EUROPEAN SEARCH REPORT

Application Number

EP 08 30 5260

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| Y | WO 2007/025878 A (THOMSON LICENSING [FR]; BLONDE LAURENT [FR]; STAUDER JURGEN [FR]; THOL) 8 March 2007 (2007-03-08) * abstract; figure 2 * | 1-3,7-9 | INV. H04N1/401 H04N1/60 |
| Y | US 2004/263876 A1 (CHANG JAMES ZHIXIN [US]) 30 December 2004 (2004-12-30) * paragraph [0006] - paragraph [0011] * | 1-3,7-9 | |
| Y | US 2004/136913 A1 (DUGGER HARRY A [US] ET AL) 15 July 2004 (2004-07-15) * abstract; figures 2,8 * * paragraph [0071] - paragraph [0072] * | 3 | |
| A | EP 1 536 630 A (LOGO BETEILIGUNGSGES MBH [DE]) 1 June 2005 (2005-06-01) * paragraph [0031] - paragraph [0032] * | 3 | |
| A | EP 1 729 257 A (XEROX) 6 December 2006 (2006-12-06) * abstract; figure 2 * * paragraph [0021] * | 3,7 | |
| A | EP 1 845 703 A (THOMSON LICENSING [FR]) 17 October 2007 (2007-10-17) | | TECHNICAL FIELDS SEARCHED (IPC) H04N |
| A | US 5 664 072 A (UEDA MASASHI [JP] ET AL) 2 September 1997 (1997-09-02) * figures 1,2 * * column 2, line 15 - line 55 * | 1 | |
| A | US 5 491 568 A (WAN SHIJIE [US]) 13 February 1996 (1996-02-13) | | |
| E | US 2008/159763 A1 (NAKANE NAOMI [JP]) 3 July 2008 (2008-07-03) * abstract; figure 8 * | 1 | |

The present search report has been drawn up for all claims

| Place of search | Date of completion of the search | Examiner |
|---|---|---|
| Berlin | 16 October 2008 | Kassow, Harald |

CATEGORY OF CITED DOCUMENTS

X : particularly relevant if taken alone
Y : particularly relevant if combined with another
document of the same category
A : technological background
O : non-written disclosure
P : intermediate document

T : theory or principle underlying the invention
E : earlier patent document, but published on, or
after the filing date
D : document cited in the application
L : document cited for other reasons

& : member of the same patent family, corresponding
document

EPO FORM 1503 03.82 (P04C01)

## ANNEX TO THE EUROPEAN SEARCH REPORT
## ON EUROPEAN PATENT APPLICATION NO.

EP 08 30 5260

This annex lists the patent family members relating to the patent documents cited in the above-mentioned European search report.
The members are as contained in the European Patent Office EDP file on
The European Patent Office is in no way liable for these particulars which are merely given for the purpose of information.

16-10-2008

| Patent document cited in search report | | Publication date | Patent family member(s) | | Publication date |
|---|---|---|---|---|---|
| WO 2007025878 | A | 08-03-2007 | EP | 1761037 A1 | 07-03-2007 |
| US 2004263876 | A1 | 30-12-2004 | JP | 2005051752 A | 24-02-2005 |
| US 2004136913 | A1 | 15-07-2004 | US | 2004120896 A1 | 24-06-2004 |
| EP 1536630 | A | 01-06-2005 | US | 2005134879 A1 | 23-06-2005 |
| EP 1729257 | A | 06-12-2006 | JP | 2006340352 A | 14-12-2006 |
| | | | US | 2006274337 A1 | 07-12-2006 |
| EP 1845703 | A | 17-10-2007 | WO | 2007116077 A1 | 18-10-2007 |
| US 5664072 | A | 02-09-1997 | JP | 2959385 B2 | 06-10-1999 |
| | | | JP | 7115554 A | 02-05-1995 |
| US 5491568 | A | 13-02-1996 | NONE | | |
| US 2008159763 | A1 | 03-07-2008 | JP | 2008167432 A | 17-07-2008 |

EPO FORM P0459

For more details about this annex : see Official Journal of the European Patent Office, No. 12/82

## REFERENCES CITED IN THE DESCRIPTION

### Patent documents cited in the description

- US 6494557 B
- US 2003063338 A
- US 7170535 B
- WO 2007025878 A
- US 4745467 A
- US 6404517 B
- US 6069973 A
- US 6284445 B
- US 5416613 A
- US 6717674 B